**Europäisches Patentamt**

(19) **European Patent Office**

**Office européen des brevets**

(11) Veröffentlichungsnummer: **0 154 784**
**B1**

(12) # EUROPÄISCHE PATENTSCHRIFT

(45) Veröffentlichungstag der Patentschrift:
08.04.87

(51) Int. Cl.⁴: **B 60 T 8/28**

(21) Anmeldenummer: **85100851.6**

(22) Anmeldetag: **28.01.85**

(54) Blockierschutzeinrichtung für die Radbremsen eines Fahrzeuges, insbesondere Kraftfahrzeuges.

(30) Priorität: **03.02.84 DE 3403839**

(43) Veröffentlichungstag der Anmeldung:
**18.09.85 Patentblatt 85/38**

(45) Bekanntmachung des Hinweises auf die Patenterteilung:
**08.04.87 Patentblatt 87/15**

(84) Benannte Vertragsstaaten:
**BE DE FR GB IT NL SE**

(56) Entgegenhaltungen:
**EP-A-0 060 545**
**DE-A-2 224 180**
**DE-A-2 224 274**
**DE-A-2 517 571**
**DE-A-2 938 437**

(73) Patentinhaber: **KNORR- BREMSE AG, Moosacher Strasse 80 Postfach 401060, D-8000 München 40 (DE)**

(72) Erfinder: **Eckhart, Alfred, Friedenheimerstrasse 46, D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Blockierschutzeinrichtung für die Radbremsung eines Fahrzeuges, insbesondere Kraftfahrzeuges gemäß dem Obergriff des Anspruches 1 oder 2.

Eine solche Einrichtung ist durch die DE-A-26 25 502, DE-A-27 39 513 und DE-A-28 55 876 bekannt.

Aufgabe der Erfindung ist es, die vorstehende Blockierschutzeinrichtung im Aufbau wesentlich zu vereinfachen und die Teilezahl der Einrichtung weitgehend zu verringern, um dadurch vor allem die Herstellungs- und Montagekosten beachtlich senken und die Sicherheit der Ventilfunktion weiter erhöhen zu können. Außerdem sollen die Ventilverlustzeiten verbessert und ein gutes Funktions-, Ansprech- und Stufbarkeitsverhalten auch in der Kälte gewährleistet sein.

Die Aufgabe wird erfindungsgemäß mit den Merkmalen des Anspruches 1 oder 2 gelöst. Vorteilhafte Ausführungen ergeben sich aus den Merkmalen der Unteransprüche oder aus der nachfolgenden Beschreibung für ein Ausführungsbeispiel, das in einer Zeichnung mehr im einzelnen dargestellt ist. Hierin zeigt:

Figur 1 eine jeweils halbseitige Teilschnitt- und Vorderansicht der erfindungsgemäßen Blockierschutzeinrichtung und

Figur 2 zwei Teilschnittansichten von IIa-IIa und IIb - IIb in Fig. 1.

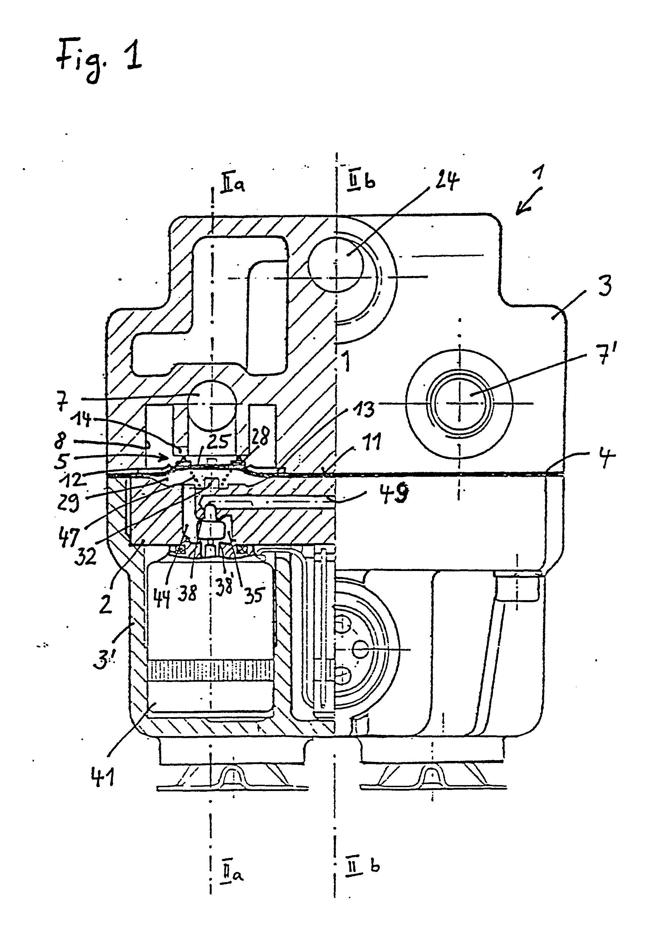

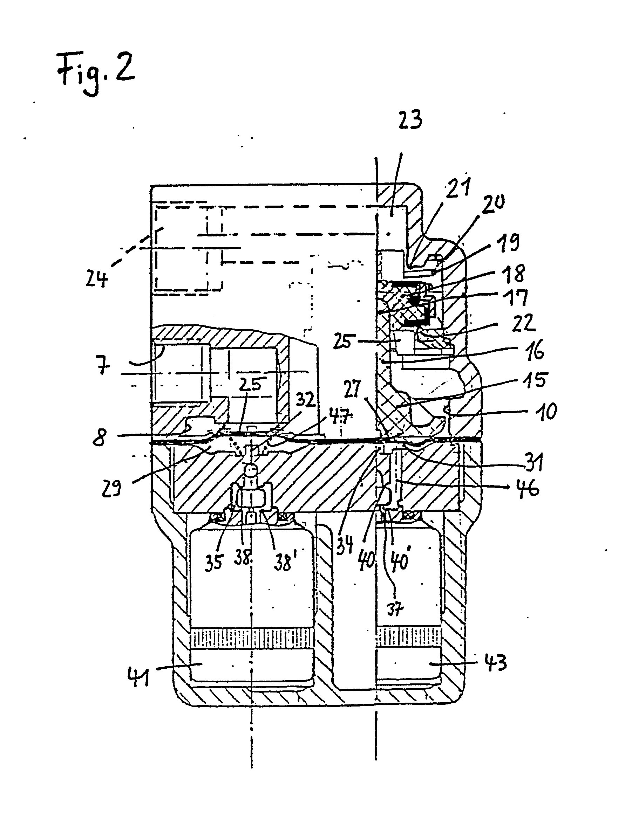

Die in den Figuren 1 und 2 dargestellte erfindungsgemäße Blockierschutzeinrichtung 1 besteht aus einem Ventilgehäuseblock 3, einer Magnetwentil-Trägerplatte 2 und einer Magnetwentil-Gehäusekappe 3', die einen Absatz zur Aufnahme der Trägerplatte 2 aufweist. Zwischen dem Ventilgehäuseblock 3 und der Magnetwentil-Gehäusekappe 3'' mit der eingesatzten Magnetventil-Trägerplatte 2 ist eine Membran 4 bzw. eine Dichtungsplatte eingespannt. Die erfindungsgemäße Blockierschutzeinrichtung umfaßt zwei Zwei/Zwei-Wege-Ventile und ein Drei/Zwei-Wege-Ventil sowie drei Magnetventile in einer Schaltung wie sie durch die DE-A 26 25 502 bekannt ist.

Der Einfachheit halber ist in den Figuren 1 und 2 nur das eine der beiden Zwei/Zwei-Wege-Ventile 5 in zwei zueinander rechtwinklig liegenden Schnittansichten dargestellt. Das andere Zwei/Zwei-Wege-Ventil ergäbe sich aus spiegelbildlichen Darstellungen des in Fig. 1 und 2 dargestellten Ventils 5. Das Drei/Zwei-Wege-Ventil liegt in einer hinter der in Fig. 1 gezeigten Schnittebene und ist in Fig. 2 nur bis zur Symmetrieachse geschnitten. Die Anschlüsse zu den beiden Bremszylindern der Räder auf einer Fahrzeugachse sind mit 7 und 7' bezeichnet, von denen nur der Anschluß 7 geschnitten ist, der von dem einen Zwei/Zwei-Wege-Ventil 5 überwacht wird, während der andere Anschluß 7' in Verbindung mit dem nicht geschnitten anderen Zwei/Zwei-Wege-Ventil nur in der Ansicht dargestellt ist.

Der Ventilgehäuseblock 3 besitzt drei gleichartige zylindrische Gehäuseausnehmungen, won denen eine erste und eine zweite Gehäuseausnehmung für die beiden Zwei/Zwei-Wege-Ventile und die dritte Gehäuseausnehmung für das Drei/Zwei-Wege-Ventil bestimmt ist. In den Figuren 1 und 2 sind jeweils die erste Gehäuseausnehmung 8 für das eine Zwei/Zwei-Wege-Ventil 5 ersichtlich. In Fig. 2 ist außerdem die dritte Gehäuseausnehmung 10 für das Drei/Zwei-Wege-Ventil zur Hälfte gezeigt. Die drei zylindrischen Gehäuseausnehmungen für die drei Ventile liegen vorteilhafterweise in der Anschlußebene 11 des Ventilgehäuseblockes 2.

Die beiden Gehäuseausnehmungen 8 für die beiden Zwei/Zwei-Wege-Ventile besitzen am Austrittsende jeweils eine ringförmige Erweiterung 12 zur Aufnahme eines Membranabstützringes 13, die die freien Austrittsquerschnitte der Gehäuseausnehmungen 8 für die beiden Zwei/Zwei-Wege-Ventile wesentlich verringern.

In die beiden parallelen Gehäuseausnehmungen 8 für die Zwei/Zwei-Wege-Ventile ragt jeweils ein Ventilsitz 14, der dicht unterhalb des zum Ventilsitz leicht abgebogenen Innenrandes des Membranabstützringes 13 endet und an einen Bremszylinderanschluß 7 bzw. 7' angeschlossen ist. Die dritte Gehäuseausnehmung 10 nimmt einen Ventilteller 15 mit einem Ventilstößel 16 auf, der sich an seinem freien Ende 17 an einem Ventilkörper 18 abstützt, der in Ventiltellerrichtung von der Feder 19 belastet ist, die sich am Boden 20 des Ventilgehäuseblockes abstützt. Der Ventilkörper 18 ist zwischen zwei koaxialen Ventilsitzen 21 und 22 verschieblich, von denen der eine Ventilsitz 21 an einen Raum 23 anschließt, der über den Gehäuseanschluß 24 an die Bremsleitung angeschlossen ist. Der andere Ventilsitz 22 schließt an einen entlüfteten Raum 25 an.

Die als Abdichtungsplatte zwischen dem Magnetventilgehäuse 3' und dem Ventilgehäuseblock 3 angeordnete Membran 4 weist drei Membranabschnitte auf, von denen die beiden ersten Membranabschnitte den beiden Zwei/Zwei-Wege-Ventile und der dritte Membranabschnitt dem Drei/Zwei-Wege-Ventil zugeordnet ist. Von den Membranabschnitten ist nur der eine Membranabschnitt 8 für das Zwei/Zwei-Wege-Ventil 5 und der dritte Membranabschnitt 10 für das Drei/Zwei-Wege-Ventil dargestellt. Die beiden ersten Membranabschnitte besitzen ventilsitzseitig ringartige Verstärkungen 28, die sich in der Schließstellung der Zwei/Zwei-Wege-Ventile auf den Ventilsitzen 14 abstützen. Das dritte Membranwentil 10 stützt sich auf dem Ventilteller 15 ab.

Die Magnetventil-Trägerplatte 2 besitzt membranseitig drei muldenförmige Vertiefungen für die beiden Zwei/Zwei-Wege-Ventile, wobei nur die eine Vertiefung 29 für das eine Zwei/Zwei-Wege-Ventil 5 und die dritte muldenförmige Vertiefung 31 für das Drei/Zwei-Wege-Ventil gezeigt ist. Die drei muldenförmigen Vertiefungen liegen den drei Membranabschnitte 25, 27 der Membran 4 gegenüber und werden damit won den Membranabschnitten abgedeckt. In die muldenförmigen Vertiefungen 29, 31 ragen zentrale Erhebungen 32, 34 zur mittigen Abstützung der Membranabschnitte.

Magnetwentilseitig besitzt die Trägerplatte 2 drei Ausnehmungen 35, 37 mit je einem Ventilsitz 38, 40. Die Ausnehmungen mit den Ventilsitzen sind im wesentlichen gleich Ausgebildet. Die beiden ersten ausnehmungen sind den beiden Zwei/Zwei-Wege-Ventilen und die dritte Ausnehmung 37 ist dem Drei/Zwei-Wege-Ventil zugeordnet.

Von den beiden ersten Ausnehmungen ist nur die Ausnehmung 35 gegenüber dem einen Zwei/Zwei-Wege-Ventil 5 dargestellt, während die dritte Ausnehmung 37 zur Hälfte dargestellt ist.

Die drei Ventilsitze werden von je einem Magnetwentil überwacht, won denen hier wiederum nur zwei Magnetwentile 41 und 43 dargestellt sind. Die Ventilsitze 38, 40 sind über eine Bohrung 49 und eine an die Bohrung 49 anschließende, hier nicht näher dargestellte Kanalverbindung an den Raum 23 angeschlossen, der seinerseits, wie schon gesagt, über den Gehäuseanschluß 24 an das Bremsventil angeschlossen ist. Die nicht gezeigte Kanalverbindung ist durch eine Durchbrechung in der Membran 4 geführt. Hierbei kann es sich um eine Verbindung handeln, wie sie in der DE-A- 28 55 976 beschrieben und dargestellt ist, so daß hierzu weitere Erläuterungen nicht erforderlich sind.

Außerhalb der Ventilsitze 38, 40 sind die Ausnehmungen 35, 37 über je eine Bohrung 44, 46 mit einer muldenförmigen Vertiefung 29, 31 verbunden. In der Ventilstellung nach Fig. 1 und 2 sind die Ventilsitze 38, 40 von den Magnetwentilen 41, 43 abgesperrt. Hierdurch sind die weiteren koaxial liegenden Ventilsitze 38' und 40' der Magnetventile geöffnet, so daß eine Entlüftung über nicht dargestellte Kanäle gegeben ist. Im dargestellten Falle sind damit die muldenförmigen Vertiefungen 29, 31 über die. Kanäle 44, 46 und die geöffneten Ventilsitze 38', 40' entlüftet. Im drucklosen Zustand werden die beiden Membranabschnitte 25 der muldenförmigen Vertiefungen 29 durch die Federn 47 an die Ventilsitze 14 angedrückt, während der Membranabschnitt 27 auf dem Ventilteiler 15 aufliegt, der durch die Feder 19 von unten gegen den Membranabschnitt 27 gedrückt wird.

Die miteinander in Verbindung stehenden Gehäuseausnehmungen 8 und 10 sind bei geöffnetem Ventilsitz 21 über eine nicht gezeigte Kanalverbindung an den Raum 23 angeschlossen, der über den Gehäuseanschluß 24 mit dem Bremsventil in Verbindung steht. Bei normaler Bremsung befinden sich die Magnetventile in der dargestellten Stellung. Bremsluft gelangt dabei über die Ventilsitze 14 in die Bremszylinder. Die Federn 47 sind schwach ausgelegt, so daß die Membranabschnitte 25 von der Bremsluft entgegen der Kraft der Federn 47 in die Öffnungsstellung gebracht werden.

Wird das Magnetwentil 43 betätigt, so wird der Ventilsitz 40 geöffnet und der Ventilsitz 40' abgesperrt. Hierdurch gelangt Bremsluft über den Kanal 47, das offene Ventil 40, die Bohrung 46 in die muldenförmige Vertiefung 31, wodurch der Ventilteller in Fig. 2 über den Membranabschnitt 27 nach oben gedrückt wird. Hierdurch wird der Ventilkörper 18 axial verschoben, um dabei den Ventilsitz 22 zu öffnen und den Ventilsitz 21 abzusperren. Der Anschluß der Ventile an die Bremszylinder ist damit unterbunden. Stattdessen sind die Zylinder über die Gehäuseanschlüsse 7, 7' und die nur von den schwachen Federn 47 in Schließstellung gehaltenen Zwei/Zwei-Wege-Ventile an eine Entlüftung angeschlossen. Das ändert sich bei Betätigung eines oder beider Magnetwentile 41, weil dann ein oder beide Ventilsitze 38 freigegeben und die Ventilsitze 38' abgesperrt werden. Hierdurch gelangt Bremsluft über die Kammer 23 und die anschließende nicht gezeigte Kanalverbindung in den Kanal 47 und von hier in den oder die offenen Ventilsitze 38, die Ausnehmungen 35 und die Bohrungen 44 in die muldenförmigen Vertiefungen 29, um die Membranabschnitte 25 auf die Ventilsitze zu drücken.

Hierdurch wird eine weitere Entlüftung eines oder beider Bremszylinder unterbunden. Entsprechend der DE-A- 26 25 502 können mit den drei Magnetventilen 41, 43 und den beiden Zwei/Zwei-Wege-Ventilen im Verein mit dem Drei/Zwei-Wege-Ventil beide Bremszylinder individuell gesteuert werden. Ein Vergleich der bekannten Blockierschutzeinrichtung nach der DE-A- 28 55 876 mit der erfindungsgemäßen Einrichtung verdeutlicht den wesentlich einfacheren Aufbau und die Vergleichsweise wesentlich geringerer Anzahl der Ventilteile. Es ist klar, daß dadurch die Herstellungs- und Montagekosten der erfindungsgemäßen Blockierschutzeinrichtung gegenüber der bekannten Einrichtung nach der DE-A- 28 55 876 wesentlich gesenkt werden konnten, wodurch auch die Funktionssicherheit der Ventilfunktion beachtlich erhöht werden konnte.

Versuche zeigten, daß die Ventilverlustzeiten der erfindungsgemäßen Einrichtung gegenüber der Einrichtung nach der DE-A- 28 55 876 beachtlich werbessert sind. Außerdem wird auch in der Kälte ein befriedigenderes Funktions-, Ansprech- und Stufbarkeitsverhalten erreicht.

Es ist klar, daß statt einer durchgehenden Membran 4 mit den Membranabschnitten 25, 27 auch drei einzelne Membrane in der Ausbildung der Membranabschnitte 25, 27 vorgesehen sein können, die dann jeweils separat zwischen dem Magnetwentilträger 2 und dem Ventilgehäuseblock 3 eingespannt sind.

andererseits kann bei der Verwendung einer durchgehenden Membran 4 entsprechend Fig. 1 und 2 auf die Feder 47 werzichtet werden, wenn die entsprechenden Federkräfte als Membranvorspannkräfte durch eine besondere. Membrangestaltung in die betreffenden Membranabschnitte integriert werden können.

Mit der Blockierschutzeinrichtung wird auf bekannte Weise der Bremsdruck in zwei Bremszylindern einer Fahrzeugachse gemeinsam geregelt, wobei nur ein einziges Drei/Zwei-Wege-Ventil verwendet wird, dem für je einen Bremszylinder ein eigenes Zwei/Zwei-Wege-Ventil nachgeordnet ist. Um die bekannten konstruktiven Lösungen für derartige Ventile wesentlich zu vereinfachen und die Funktion zu verbessern sowie die Funktionssicherheit zu erhöhen, sind die drei verschiedenen Mehrwege-Ventile z.B. in einer Ebene angeordnet, und vorzugsweise ist eine einzige Membran mit integrierten Membranabschnitten zur Betätigung der einzelnen Ventile vorhanden. Die Membran dichtet das Magnetventilgehäuse mit der Magnetventil-Trägerplatte gegenüber einem Magnetventilblock zur Aufnahme der drei verschiedenen Wege-Ventile ab.

Es ist klar, daß die Erfindung auf die dargestellte Ausführung nicht beschränkt ist. Insbesondere können drei einzelne Membranabschnitte für die drei Mehrwege-Ventile auch dann entsprechend der Erfindung verwendet werden, wenn diese nicht in einer Ebene angeordnet sind. So können die beiden Membranabschnitte für die beiden Zwei/Zwei-Wege-Ventile auch in einer anderen Ebene als die Membran für das Drei/Zwei-Wege-Ventil angeordnet sein. Hierbei ist es dann möglich, die beiden Membranabschnitte für die beiden Zwei/Zwei-Wege-Ventile in einer gemeinsamen Membran zu vereinigen, die auch Gehäusedichtfuntion übernimmt. Schließlich können die drei Mehrwege-Ventile entsprechend der DE-A- 28 55 876 räumlich zueinander angeordnet sein. Auch hierdurch wird die erfindungsgemäße Aufgabe noch im wesentlichen erfüllt. Eine solche Lösung bietet den Vorteil, daß wesentliche Teile der Konstruktion nach der DE-A- 28 55 876 verwendbar sind.

**Patentansprüche**

1. Blockierschutzeinrichtung für die Radbremsung eines Fahrzeuges, insbesondere Kraftfahrzeuges, mit gemeinsamer Regelung des Bremsdruckes in den Bremszylindern einer Fahrzeugachse und einem in die zu den beiden Bremszylindern führende gemeinsame Bremsleitung eingesetzten pneumatischen Drei/Zwei-Wege-Ventil, wobei die Bremsleitung hinter dem Drei/Zwei-Wege-Ventil in zwei Bremszylinder-Anschlußleitungen gabelt, die jeweils mit einem Bremszylinder verbunden sind, und in jeder Bremszylinder-Anschlußleitung ein pneumatisches Zwei/Zwei-Wege-Ventil eingeschaltet ist, und wobei jedes Ventil won einem separaten Magnetwentil vorgesteuert ist, die auf einer gemeinsamen Magnetventil-Trägerplatte angeordnet sind und über je eine wor dem Drei/Zwei-Wege-Ventil von der Bremsleitung abzweigende Ventilanschlußleitung an die Bremsleitung angeschlossen sind, dadurch gekennzeichnet,

-- daß in eine parallel zur Magnetwentil-Trägerplatte (2) liegenden Anschlußebene (11) eines die drei pneumatischen Ventile aufnehmenden Ventilgehäuseblockes (3) drei zylindrische Gehäuseausnehmungen (8, 10) austreten, von denen die erste und zweite Gehäuseausnehmung (8) jeweils am Austrittsende eine ringförmige Erweiterung (12) zur Aufnahme eines Membranabstützringes (13) aufweisen, die die freien Austrittsquerschnitte der Gehäuseausnehmungen wesentlich verringern,

-- daß zentrisch in die erste und zweite Gehäuseausnehmung (8) jeweils ein Ventilsitz (14) hineinragt, der dicht unterhalb des Innenrandes des zugehörigen Membranabstützringes (13) endet,

-- daß die dritte Gehäuseausnehmung (10) zur Aufnahme eines Ventiltellers (15) mit einem Ventilstößel (16) dient, der sich an seinem freien Ende (17) an einem federbelasteten Ventilkörper (18) abstützt, welcher zur Bildung des Drei/Zwei-Wege-Ventils zwischen zwei koaxial angeordneten Ventilsitzen (21, 22) über den Stößel (16) verschieblich ist,

-- daß zwischen der Magnetwentil-Trägerplatte (2) und der Anschlußebene (11) des Ventilgehäuseblockes (3) drei Membranelemente (25, 27) eingespannt sind, von denen das erste und zweite in Ventilsitzrichtung vorgespannte Membranelement (25) der ersten und zweiten Gehäuseausnehmung (8) zugeordnet ist und das dritte Membranelement (27) zur Betätigung des Drei/Zwei-Wege-Ventils sich auf dem Ventilteller (15) abstützt,

-- daß die Magnetwentil-Trägerplatte (2) membranseitig drei muldenförmige Vertiefungen (29, 31) aufweist, die von den Membranelementen (25, 27) abgedeckt sind, wobei in die muldenförmigen Vertiefungen (29, 31) zentrale Erhebungen (32, 34) zur mittleren Abstützung der Membranelemente hineinragen, und

-- daß die Magnetventil-Trägerplatte (2) magnetseitig drei Ausnehmungen (35, 37) aufweist, die jeweils von einem Magnetwentil (41, 43) überwacht sind, wobei die Ausnehmungen jeweils über erste Bohrungen (44, 46) an die membranseitigen, muldenförmigen Vertiefungen (29, 31) der Magnetventil-Trägerplatte (2) und über eine zweite Bohrungen (49) an die Bremsleitung angeschlossen sind.

2. Blockierschutzeinrichtung für die Radbremsung eines Fahrzeuges, insbesondere Kraftfahrzeuges, mit gemeinsamer Regelung des Bremsdruckes in den Bremszylindern einer Fahrzeugachse und einem in die zu den beiden Bremszylindern führende gemeinsame Bremsleitung eingesetzten pneumatischen Drei/Zwei-Wege-Ventil, wobei die Bremsleitung hinter dem Drei/Zwei-Wege-Ventil in zwei Bremszylinder-Anschlußleitungen gabelt, die jeweils mit einem Bremszylinder werbunden sind, und in jeder Bremszylinder-Anschlußleitung ein pneumatisches Zwei/Zwei-Wege-Ventil eingeschaltet ist, und wobei jedes Ventil von einem separaten Magnetventil vorgesteuert ist, die auf einer gemeinsamen Magnetventil-Trägerplatte angeordnet sind und über je eine vor dem Drei/Zwei-Wege-Ventil von der Bremsleitung abzweigende Ventil-Anschlußleitung an die Bremsleitung angeschlossen sind, dadurch gekennzeichnet,

-- daß ein die drei pneumatischen Ventile aufnehmender Ventilgehäuseblock drei zylindrische Gehäuseausnehmungen aufweist, von denen die erste und zweite koaxial liegende Gehäuseausnehmung jeweils am Austrittsende eine ringförmige Erweiterung zur Aufnahme eines Membranabstützringes aufweisen, die die freien Austrittsquerschnitte der Gehäuseausnehmungen wesentlich verringern,

-- daß zentrisch in die erste und zweite Gehäuseausnehmung jeweils ein Ventilsitz (14) hineinragt, der dicht unterhalb des Innenrandes des zugehörigen Membranstützringes (13) endet,

-- daß die im rechten Winkel zu den beiden ersten Gehäuseausnehmungen liegende dritte Gehäuseausnehmung zur Aufnahme eines Ventiltellers mit einem Ventilstößel dient, der sich an seinem freien Ende an einem federbelasteten Ventilkörper abstützt, welcher zur Bildung des Drei/Zwei-Wege-Ventils zwischen zwei koaxial angeordneten Ventilsitzen über den Stößel verschieblich ist,

-- daß zwischen deckelartigen Gehäuseteilen und dem Ventilgehäuseblock drei Membranelemente eingespannt sind, von denen das erste und zweite in Ventilsitzrichtung vorgespannte Membranelement der ersten und zweiten Gehäuseausnehmung zugeordnet ist und das dritte Membranelement (27) zur Betätigung des Drei/Zwei-Wege-Ventils sich auf dem Ventilteller (15) abstützt,

-- daß die deckelartigen Gehäuseteile membranseitig drei muldenförmige Vertiefungen aufweist, die won den Membranelementen abgedeckt sind, wobei in die dem ersten und zweiten Membranelement zugeordneten muldenförmigen Vertiefungen zentrale Erhebungen zur mittleren Abstützung der Membranelemente und zur Lagefixierung von Ventilfedern hineinragen.

3. Blockierschutzeinrichtung nach Anspruch 1, dadurch gekennzeichnet, daß die Membranelemente (25, 27) in eine Dichtungsplatte (4) integriert sind, die zwischen der Magnetventil-Trägerplatte (2) und dem Ventilgehäuseblock (3) eingespannt ist.

4. Blockierschutzeinrichtung nach Anspruch 1, 2 oder 3, dadurch gekennzeichnet, daß die beiden zentralen Erhebungen (32, 34) in den membranseitigen, muldenförmigen Trägerplatten Vertiefungen (29), die jeweils einem der beiden Zwei/Zwei Wege-Ventile zugeordnet sind, jeweils zur Lagefixierung einer Ventilfeder (47) vorgesehen sind, die die zugehörigen Membranelemente bzw. Abschnitte der Dichtungsplatte in Ventilschließrichtung belasten.

5. Blockierschutzeinrichtung nach Anspruch 1, 2, 3 oder 4, dadurch gekennzeichnet, daß die Membranelemente (25) eine Formgestalt mit einer in Ventilschließrichtung der Zwei/Zwei-Wege-Ventile wirkenden Eigenvorspannung aufweisen.

## Claims

1. Anti-skid device for the wheel brakes of a vehicle, particularly for motor vehicles, with common control of the brake pressure in the brake cylinders of a vehicle axle and a pneumatic three/two-way acting valve arranged in the common brake line leading to the two brake cylinders, in which the brake line forks after the three/two-way acting valve into two brake cylinder connection lines, which are each linked with a respective brake cylinder, and a pneumatic two/two-way acting valve is connected in each brake cylinder connection line and in which each valve is controlled by a separate solenoid valve, which solenoid valves are arranged on a common solenoid valve carrier plate and are connected to the brake line via respective valve connection lines, branching off from the brake line before the three/two-way acting valve, characterised in that:

three cylindrical housing cavities (8, 10) open into a connection plane (11), lying parallel to the solenoid valve carrier plate (2), of a valve housing block (3) receiving the three pneumatic valves, of which the first and second housing cavities (8) have at their outlet ends respective annular enlarged portions (12) for receiving respective membrane support rings (13) for substantially reducing the free outlet cross-sections of the housing cavities;

there extend centrally into the first and second housing cavities (8) respective valve seats (14), which terminate tightly beneath the inner edge of the corresponding membrane support ring (13);

the third housing cavity (10) serves to receive a valve head (15) with a valve tappet (16), which is supported at its free end (17) against a springloaded valve body (18), which is displaceable, via the tappet (16), between two coaxially arranged valve seats (21, 22) to form the three/two-way acting valve,

there are held between the solenoid valve carrier plate (2) and the connection plane (11) of the valve housing block (3) three membrane elements (25, 27), of which first and second membrane elements (25), biased in the valve seat direction, correspond respectively to the first and second housing cavities (8), and the third membrane element (27), for operating the three/two-way acting valve, is supported on the valve head (15);

the solenoid valve carrier plate (2) has three trough-shaped depressions (29, 31) on the membrane side, which are covered by the membrane elements (25, 27), wherein central projections (32, 34) extend into the trough-shaped depressions (29, 31) for midway support of the membrane elements; and

the solenoid valve carrier plate (2) has on the magnet side three recesses (35, 37), which are associated with respective solenoid valves (41, 43), the recesses being connected respectively via first boreholes (44, 46) to the trough-shaped depressions (29, 31) on the membrane side of the solenoid valve carrier plate (2) and via a second borehole (49) to the brake line.

2. Anti-skid device for the wheel brakes of a vehicle, particularly for motor vehicles, with common control of the brake pressure in the brake cylinders of a vehicle axle and a pneumatic three/two-way acting valve arranged in the common brake line leading to the two brake cylinders, in which the brake line forks after the three/two-way acting valve into two brake cylinder connection lines, which are each linked with a respective brake cylinder and a pneumatic two/two-way acting valve is connected in each brake cylinder connection line, and in which each valve is controlled by a separate solenoid valve, which solenoid valves are arranged on a common solenoid valve carrier plate and are connected to the brake line via respective valve connection lines, branching off from the brake line before the three/two-way acting valve, characterised in that:

a valve housing block receiving the three pneumatic valves has three cylindrical housing cavities, of which the first and second coaxially arranged housing cavities have at their outlet ends a respective annular enlarged portion for receiving a membrane support ring, to substantially reduce the free outlet cross-sections of the housing cavities;

there extend centrally into the first and second housing cavities respective valve seats (14), which terminate tightly beneath the inner edge of the corresponding membrane support ring (13);

the third housing cavity, which is arranged at a right angle to both of the first housing cavities, serves for receiving a valve head with a valve tappet, which is supported at its free end on a spring loaded valve body, which, for forming the three/two-way acting valve, is displaceable via the tappet between two valve seats arranged coaxially;

there are secured between cover-like housing parts and the valve housing block three membrane elements, of which the first and second membrane elements, biased in the valve seat direction, correspond respectively to the first and second housing cavities and the third membrane element (27) is supported on the valve head (15) for operating the three/two-way acting valve;

the cover-like housing parts have three trough-shaped depressions on the membrane side, which are covered by the membrane elements, wherein central projections for midway support of the membrane elements, and for positioning valve springs, extend into the trough-shaped depressions corresponding to the first and second membrane elements.

3. Anti-skid device according to claim 1, characterised in that the membrane elements (25, 27) are integral with a packing sheet (4), which is secured between the solenoid valve carrier plate (2) and the valve housing block (3).

4. Anti-skid device according to claim 1, 2 or 3, characterised in that the two central projections (32, 34) in the trough-shaped carrier plate depressions (29) on the membrane side, which projections correspond respectively to the two two/two-way acting valves, are provided for fixing respective valve springs (47) in position, which springs bias the corresponding membrane elements or portions of the packing sheet, in the valve closing direction.

5. Anti-skid device according to claim 1, 2, 3 or 4, characterised in that the membrane elements (25) are designed with their own prestress acting in the valve closing direction of the two/two-way acting valves.

**Revendications**

1. Dispositif de protection contre le blocage pour le freinage de roues d'un véhicule, en particulier d'un véhicule automobile, avec réglage commun de la pression de freinage dans les cylindres de frein d'un axe du véhicule, et avec une soupape pneumatique à trois/deux voies insérée dans la conduite de frein commune qui mène aux deux cylindres de frein, du type dans lequel la conduite de frein se subdivise en aval de la soupape trois/deux voies, en deux conduites de raccordement au cylindre de frein, dont chacune est reliée à un cylindre de frein, alors que dans chacune de ces deux conduites de raccordement est montée une soupape à deux/deux voies, et dans lequel chaque soupape est précommandée par une électrovanne distincte, lesdits électrovannes étant montées sur une plaque-support commune et étant reliées à la conduite de frein par respectivement une conduite de raccordement aux cylindres de frein, dérivée de la conduite de frein, en amont de la soupape à trois/deux voies, caractérisé par le fait

- que dans un plan de raccordement (11), parallèle à la plaque-support (2) des électrovannes, d'un bloc de boîtiers de soupapes (3) recevant les trois soupapes pneumatiques, sortent trois cavités cylindriques (8, 10) dont la première et la seconde cavités de boîtier (8) comportent respectivement à la sortie un élargissement annulaire (12) servant à recevoir une bague d'appui de membrane (13), réduisant notablement la section transversale de sortie des cavités du boîtier,

- qu'en position centrale pénètre respectivement dans la première et seconde cavités de boîtier (8), un siège de soupape (14) qui se termine très près en-dessous du bord intérieur de la bague d'appui des membranes (13) correspondante,

- que la troisième cavité de boîtier (10) sert à recevoir un plateau de soupape (15) à poussoir de soupape (16), qui prend appui par son extrémité libre (17) contre un corps de soupape (18) chargé par un ressort, et qui, pour former la soupape à trois/deux voies, est déplaçable par le poussoir entre deux sièges de soupape (21, 22) disposés coaxialement,

- qu'entre la plaque-support (2) des électrovannes et le plan de raccordement (11) du bloc de boîtiers de soupape (3), sont serrés trois éléments de membranes (25, 27), parmi lesquels le premier et le second élément de membrane (25) préchargé en direction du siège de soupape est associé à la première et seconde cavité de boîtier (8), alors que le troisième élément de membrane (27) prend appui contre le plateau de soupape (15), pour commander la soupape à trois/deux voies,

- que la plaque-support (2) des électrovannes comporte, du côté membranes, trois enfoncements (29, 31) en forme d'auges, qui sont recouverts par des éléments de membrane (25, 27), des parties saillantes et centrales (32, 34) pénétrant dans les enfoncements (29, 31) pour constituer un appui médian des éléments de membrane,
et

- que la plaque-support (2) des électrovannes, comporte du côté des aimants, trois ouvertures (35, 37) dont chacune est contrôlée par une électrovanne (41, 43), lesdites ouvertures étant respectivement reliées par des premiers perçages (44, 46) aux enfoncements (29, 31) en forme d'auges de ladite plaque-support (2) du côté membranes, et, par un second perçage (49) à la conduite de frein.

2. Dispositif de protection contre le blocage pour le freinage de roues d'un véhicule, en particulier d'un véhicule automobile, avec réglage commun de la pression de freinage dans les cylindres de frein d'un axe du véhicule, et avec une soupape pneumatique à trois/deux voies insérée dans la conduite de frein commune qui mène aux deux cylindres de frein, du type dans lequel la conduite de frein se subdivise en aval de la soupape trois/deux voies, en deux conduites de raccordement au cylindre de frein, dont chacune est reliée à un cylindre de frein, alors que dans chacune de ces deux conduites de raccordement est montée une soupape à deux/deux voies, et dans lequel chaque soupape est précommandée par une électrovanne distincte, lesdites électrovannes étant montées sur une plaque-support commune et étant reliées à la conduite de frein par respectivement une conduite de raccordement aux cylindres de frein, dérivée de la conduite de frein, en amont de la soupape à trois/deux voies, caractérisé par le fait

- qu'un bloc de boîtier de soupape recevant les trois soupapes pneumatiques, comporte trois cavités cylindriques de boîtier, parmi lesquelles la première et la seconde cavité coaxiale de boîtier possède chacune à l'extrémité de sortie un élargissement annulaire pour recevoir une bague d'appui de membranes, qui réduisent notablement la section transversale de passage libre des cavités de boîtier,

- qu'en position centrale pénètre respectivement dans la première et la seconde cavité de boîtier (8), un siège de soupape (14) qui se termine très près en-dessous du bord intérieur de la bague d'appui de membranes (13) correspondante,

- que la troisième cavité de boîtier située à un angle droit par rapport aux deux premières cavités de boîtier, sert à recevoir un plateau de soupape à poussoir de soupape, qui prend appui par son extrémité libre contre un corps de soupape chargée par un ressort, et qui, pour former la soupape à trois/deux voies, est déplaçable par le poussoir entre deux sièges de soupape disposés coaxialement,

- qu'entre des éléments de boîtier du genre de couvercles et le bloc de boîtier à soupapes sont serrés trois éléments de membrane parmi lesquels le premier et le second éléments de membrane, préchargé en direction du siège de soupape est associé à la première et à la seconde cavités de boîtier, alors que le troisième élément de membrane (27) prend appui contre le plateau de soupape (15), pour commander la soupape à trois/deux voies, et

- que les éléments de boîtier du genre de couvercles comportent du côté membranes, trois enfoncements en forme d'auges, qui sont recouverts par les éléments de membrane, alors que dans les enfoncements en forme d'auges qui sont associés au premier et au second éléments de membrane, pénètrent des parties saillantes et centrales pour l'appui médian des éléments de membrane et pour fixer la position de ressorts de soupape.

3. Dispositif de protection contre le blocage selon la revendication 1, caractérisé par le fait que les éléments de membrane (25, 27) sont intégrés dans une plaque d'étanchéité (4) qui est insérée entre la plaque-support (2) des électrovannes et le bloc de boîtier de soupapes (3).

4. Dispositif de protection contre le blocage selon la revendication 1, 2 ou 3, caractérisé par le fait que les deux parties saillantes et centrales (32, 34) prévues dans les enfoncements (29) en forme d'auges ménagés côté membranes dans la plaque-support, et qui sont respectivement associés à l'une des soupapes à deux/deux voies, sont prévues pour la fixation de la position de ressorts de soupape (47) qui chargent dans le sens de la fermeture des soupapes les éléments de membrane ou les sections associées de la plaque d'étanchéité.

5. Dispositif de protection contre le blocage selon la revendication 1, 2, 3 ou 4, caractérisé par le fait que les éléments de membrane (25) possèdent une conformation avec une pré-tension propre qui agit dans le sens de la fermeture des soupapes à deux/deux voies.

Fig. 1

Fig.2